# EUROPEAN PATENT APPLICATION

(11) **EP 4 840 820 A1**
(43) Date of publication of application: **18.11.2026**
(21) Application number: 26300200.8
(22) Date of filing: 11.05.2026
(51) Int. Cl.: C01B 3/12

(54) **PROCESS TO PRODUCE SYNGAS FROM CARBON DIOXIDE**

(30) Priority: 13.05.2025 EP 25305675
(71) Applicant: Technip Energies France, 92741 Nanterre Cedex (FR)
(72) Inventor: BAGHERI, Ghobad, 92741 Nanterre Cedex (FR); RIEGMAN, Jan-Jaap, 92741 Nanterre Cedex (FR)
(74) Representative: Edson, Russell Gregory

(57) **Abstract**

Methods and systems for producing syngas may include contacting a preheated feed stream with an oxidizer stream, thereby initiating hydrogen oxidation and a reverse water gas shift (rWGS) reaction to produce a raw syngas stream. The raw syngas may then be cooled in a heat recovery unit. The raw syngas stream may be contacted with a catalyst for a rWGS reaction, in the heat recovery unit and/or a line from the reactor to the heat recovery unit. The cooled raw syngas stream may be purified to produce a syngas stream.

## Description

### Technical Field

The present disclosure relates generally to chemical processing and, more particularly (although not necessarily exclusively), to systems and methods for producing syngas.

### Background

Syngas (synthesis gas), a mixture of carbon monoxide and hydrogen, is a versatile feedstock used in various industrial processes like producing methanol, producing synthetic fuels or synfuel (e.g., a liquid fuel, or sometimes gaseous fuel, compatible with combustion engines), and synthesizing industrial chemicals (e.g., lubricants, and oxo alcohols). The syngas may be derived from gasification of solid feedstocks such as coal or biomass or by reforming of natural gas. Recently, processes are being developed that utilize alternative energy sources in the production of synthesis fuel. However, the processes to produce such synthesis fuels that are compatible with combustion engines often have a large footprint and high energy consumption.

### Summary

An example embodiment of the present disclosure is a method comprising: preheating a feed stream comprising carbon dioxide and hydrogen to a temperature greater than an autoignition temperature of the feed stream; contacting the preheated feed stream with an oxidizer stream in a reactor, thereby initiating hydrogen oxidation and a reverse water gas shift (rWGS) reaction to produce a raw syngas stream; cooling the raw syngas stream in a heat recovery unit; contacting the raw syngas stream with a catalyst for a RWGS reaction, in the heat recovery unit and/or a line from the reactor to the heat recovery unit; and purifying the cooled raw syngas stream to produce a syngas stream and byproducts stream.

One or more embodiments include the method of the foregoing paragraph, wherein a portion of the rWGS reaction or all of the rWGS reaction occurs not in the presence of the catalyst. One or more embodiments include the method of the foregoing paragraph, wherein the contacting of the preheated feed stream and the oxidizer stream is in a first portion of the reactor, and wherein the catalyst is present in a second portion of the reactor downstream of the first portion of the reactor.

One or more embodiments include the method of any previous paragraph, wherein a flow velocity of the oxidizer stream is sufficiently higher than a flow velocity of the preheated feed stream to achieve shear mixing between the oxidizer stream and the preheated feed stream.

One or more embodiments include the method of any previous paragraph, wherein a molar ratio of hydrogen to carbon dioxide in the feed stream is 1:1 to 7:1.

One or more embodiments include the method of any previous paragraph, wherein the raw syngas stream exiting the reactor at 750°C to 1500°C.

One or more embodiments include the method of any previous paragraph, wherein the raw syngas stream comprises less than 1 vol% methane.

One or more embodiments include the method of any previous paragraph, wherein the oxidizer stream comprises oxygen and a diluent. The diluent may be present at 50 vol% or less.

One or more embodiments include the method of any previous paragraph further comprising: preheating the oxidizer stream before contact with the preheated feed stream.

One or more embodiments include the method of any previous paragraph, wherein the feed stream further comprises steam, methane, or both. One or more embodiments include the method of any previous paragraph, further comprising: supplying carbon dioxide, hydrogen, or both to the heat recovery unit separate from the raw syngas stream

An example embodiment of the present disclosure is a system comprising: a preheater configured to receive and heat a feed stream comprising hydrogen and carbon dioxide to a temperature greater than an autoignition temperature of the feed stream and produce a preheated feed stream; a reactor configured to receive the preheated feed stream and an oxidizer stream and produce a raw syngas stream; a heat recovery unit configured to receive and cool the raw syngas stream and produce a cooled raw syngas stream, wherein the heat recovery unit and/or a line from the reactor to the heat recovery unit contains a catalyst for a reverse water gas shift reaction such that the raw syngas comes in contact with the catalyst; and a purification unit configured to receive and purify the cooled raw syngas stream and produce a syngas product stream and a byproducts stream.

One or more embodiments include the system of the previous paragraph, wherein the reactor does not contain a catalyst for a reverse water gas shift reaction. One or more embodiments include the system of the previous paragraph, wherein the reactor contains a catalyst.

One or more embodiments include the system of any previous paragraph, wherein heat recovery unit comprises one or more heat exchangers. At least one of the one or more heat exchangers may be at least a portion of the preheater.

### Brief Description of the Drawings

FIG. 1 illustrates a process flow diagram for producing syngas according to at least some examples of the present disclosure.
FIG. 2 illustrates a diagram of an example reactor for producing syngas according to at least some examples of the present disclosure.
FIG. 3 illustrates a flow chart of a method for producing syngas according to at least some examples of the present disclosure.

### Detailed Description

The present disclosure relates to methods and systems for producing syngas via a high-temperatures reverse water gas shift (rWGS) process, which may be performed in the absence of a catalyst. Advantageously, this mitigates the formation of methane, which increases the carbon dioxide selectivity toward carbon monoxide. In the methods and systems of the present disclosure, hydrogen first undergoes partial oxidation to provide the heat required for the rWGS reaction, where a mixture of carbon dioxide and hydrogen is converted to carbon monoxide and water. This takes advantage of heating by mixing rather than indirect heating in conventional furnaces. Accordingly, the methods and systems of the present disclosure may be less energy intensive. Further, the systems may be scalable to a higher capacity and throughput with a smaller footprint than conventional furnaces.

The illustrative examples herein are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

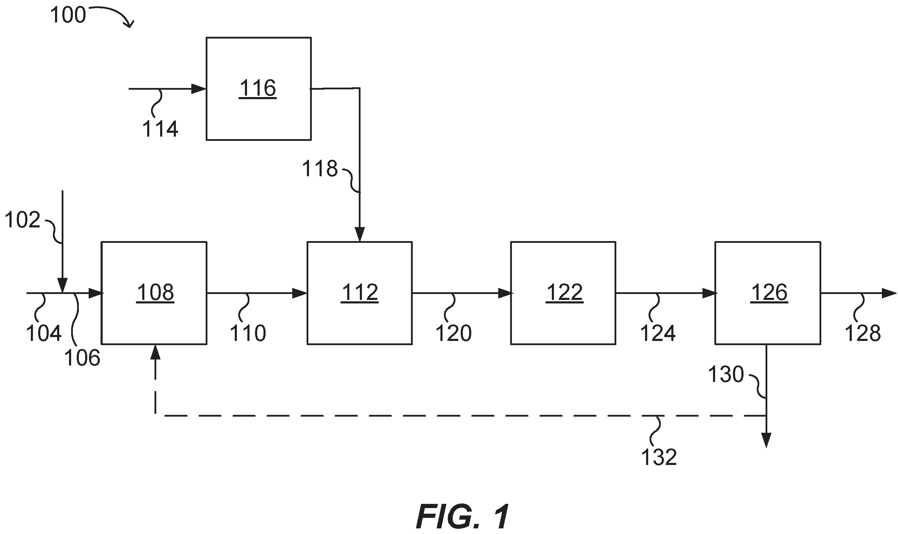

FIG. 1 illustrates a process flow diagram of a portion of a system 100 for producing syngas according to at least some examples of the present disclosure. The illustration provides a flow diagram where other equipment may be incorporated for proper operation of the system 100. For example, additional equipment like sensors, valves, pumps, and the like may be included within the flow diagram but are omitted from the figures for simplicity. Additionally, other flow streams may be included depending on the configuration of the system and its integration with other equipment and/or portions of other systems.

In the illustrated example, a hydrogen stream 102 and a carbon dioxide stream 104 may be mixed to produce a feed stream 106. The feed stream 106 may then be preheated in a preheater 108. Alternatively, the hydrogen stream 102 and the carbon dioxide stream 104 may be introduced directly to the preheater 108 and mixed therein.

Further, an oxidizer stream 114 may be preheated in a separate preheater 116. Alternatively, the oxidizer stream 114 may not be preheated.

The preheated feed stream 110 and the preheated oxidizer stream 118 (or oxidizer stream 114, if no preheating occurs) may be introduced into a reactor 112. The oxidizer stream 114 may include oxygen and, optionally, a diluent. Examples of diluents may include, but are not limited to, carbon dioxide, steam, the like, and any combination thereof. The oxygen may be present in the oxidizer stream 114 at 50 vol% or greater (e.g., 60 vol% or greater, 70 vol% or greater, from 50 vol% to 100 vol%, from 60 vol% to 100 vol%, from 70 vol% to 100 vol%, or from 75 vol% to 95 vol%). The diluent may be present in the oxidizer stream 114 at 50 vol% or less (e.g., 40 vol% or less, 30 vol% or less, from 1 vol% to 50 vol%, from 1 vol% to 40 vol%, from 1 vol% to 30 vol%, or from 5 vol% to 25 vol%). The oxidizer stream 114 may be absent a diluent.

The preheated feed stream 110 and the preheated oxidizer stream 118 should be sufficiently heated to cause autoignition of the hydrogen when the two streams 110, 118 come in contact. The autoignition temperature is the temperature at which the hydrogen will ignite without an external ignition source. The autoignition temperature may depend on the partial pressure of hydrogen, the total pressure where the reaction occurs (e.g., higher pressure reduces the autoignition temperature), the composition of each of the preheated feed stream 110 and the preheated oxidizer stream 118, and the like. The preheated feed stream 110 may be at a temperature ranging from 500°C to 1250°C (e.g., from 500°C to 1100°C, from 500°C to 1000°C, or 550°C to 850°C). The preheated oxidizer stream 118 may be at a temperature of up to 300°C (e.g., from 25°C to 300°C, from 50°C to 250°C, or 75°C to 200°C).

A mole ratio of hydrogen to carbon dioxide in the feed stream 106 may range from 1:1 to 7:1 (e.g., 1:1 to 7:1, 2:1 to 7:1, or 2:1 to 5:1).

The hydrogen may be from any suitable source. For example, the hydrogen may be produced via the electrolysis of water. Other hydrogen sources may include, but are not limited to, steam reforming, pyrolysis, partial oxidation, biomass gasification, biogas, or by separation from another hydrogen-containing stream.

The carbon dioxide can be from any suitable source and preferably is a gas stream having a high carbon dioxide concentration (e.g., greater than 50 vol% carbon dioxide, greater than 75 vol% carbon dioxide, greater than 90 vol% carbon dioxide, or greater than 95 vol% carbon dioxide). Lower carbon dioxide concentrations are feasible if the major other component in the stream is hydrogen. The carbon dioxide stream 104 may contain methane in an amount of 50 vol% or less (e.g., 40 vol% or less, 30 vol% or less, 20 vol% or less, 10 vol% or less, 5 vol% or less, or 1 vol% or less). When methane is present, the methane may be a source of hydrogen and the mole ratio of hydrogen to carbon dioxide may be lower. Further, when methane is present, the carbon dioxide stream 104 and/or the oxidizer stream 114 may preferably include steam to mitigate coking.

The carbon dioxide source may be from biogenic nature for example from a fermentation process, post combustion capture, or direct air capture (DAC), although other carbon dioxide sources may also be used.

Contacting the preheated feed stream 110 and the preheated oxidizer stream 118 and autoigniting the hydrogen therein may initiate a rWGS reaction to produce raw syngas.

Inside the reactor 112 at the reaction zone for hydrogen oxidation may be at a temperature of up to 3000°C (e.g., from 1500°C to 3000°C, from 1750°C to 2250°C, or 2000°C to 2500°C).

The reactor may be at a pressure ranging from 5 bar absolute (bara) to 100 bara (e.g., 5 bara to 75 bara, 10 bara to 60 bara, or 10 bara to 40 bara).

At the exit of the reactor 112, the raw syngas stream may be at a temperature ranging from 750°C to 1500°C (e.g., from 750°C to 1250°C, from 1000°C to 1500°C, or 750°C to 1000°C).

At least a portion of the rWGS reaction may be performed not in the presence of a catalyst. All of the rWGS reaction may be performed not in the presence of a catalyst. If used, the catalyst may be present in the reactor, a vessel downstream of the reactor, or both but downstream of the hydrogen combustion location and non-catalytic rWGS reaction.

A catalyst bed temperature in the reactor 112 and/or at a location downstream of the reactor 112 may range from 250°C to 1250°C (e.g., from 750°C to 1250°C, from 1000°C to 1500°C, 750°C to 1000°C, from 250°C to 750°C, from 250°C to 600°C, or 250°C to 400°C).

Any catalyst that facilitates the rWGS reaction may be used. For example, catalysts may include, but are not limited to, iron, nickel, cobalt, chromium, noble metals, molybdenum, the like, and any combination thereof. The catalyst may optionally be on a support like silica, alumina, titania, or carbon.

As discussed herein, advantageously, the high temperature and lack of catalyst, at least initially, may mitigate the production of methane. Accordingly, the raw syngas stream 120 may contain 1 vol% or less (e.g., 0.5 vol% or less, 0.1 vol% or less, or 0.01 vol% or less) of methane.

The raw syngas stream 120 may then be cooled in a heat recovery unit 122. The system 100 may be absent a rWGS catalyst. Alternatively, the catalyst may be present in the reactor 112, the heat recovery unit 122, the line from the reactor 112 to the heat recovery unit 122, or any combination thereof. When present, locating the catalyst downstream of the reactor may allow for a lower temperature, which may extend the lifetime of the catalyst.

The heat recovery unit 122 may include one or more heat exchangers where the raw syngas stream 120 provide heat to utility steam or a stream within the system 100. For example, the heat recovery unit 122 may be at least a portion of the preheater 108 and/or the preheater 116 to supply heat to the feed stream 106 and/or the oxidizer stream 114, respectively. In another example, the heat recovery unit 122 may be a portion of the downstream purification unit 126 to supply heat from the raw syngas stream 120 in a separation process. Combinations of the foregoing are contemplated.

When catalyst is present in the heat recovery unit 122, the system may optionally include supplying carbon dioxide, hydrogen, or both to the heat recovery unit 122 separate from the raw syngas stream 120.

The cooled syngas stream 124 may be purified to produce a syngas product stream 128 and one or more byproducts streams 130 in a purification unit 126. The purifying may include condensing and removing water, capturing carbon dioxide, removing hydrogen, removing methane, and/or other process to clean the syngas for the downstream production of synthetic hydrocarbons. For example, the carbon dioxide capture may be performed via membrane capture, vacuum swing adsorption, pressure swing adsorption, cryogenic, amine adsorption, or any combination thereof. In another example, hydrogen may be removed using a membrane unit. The carbon dioxide, hydrogen, methane, and other components removed from the cooled syngas may each be used within the method or system thus reducing the import of said components into the system from an external source. For example, one or more recycle stream 132 may be included in the system 100 for recycling unreacted hydrogen and carbon dioxide and/or recycling water for steam.

The syngas product stream 128 may be predominantly hydrogen and carbon monoxide. The desired concentration of each of the hydrogen and carbon dioxide may vary depending on the downstream hydrocarbon synthesis reaction.

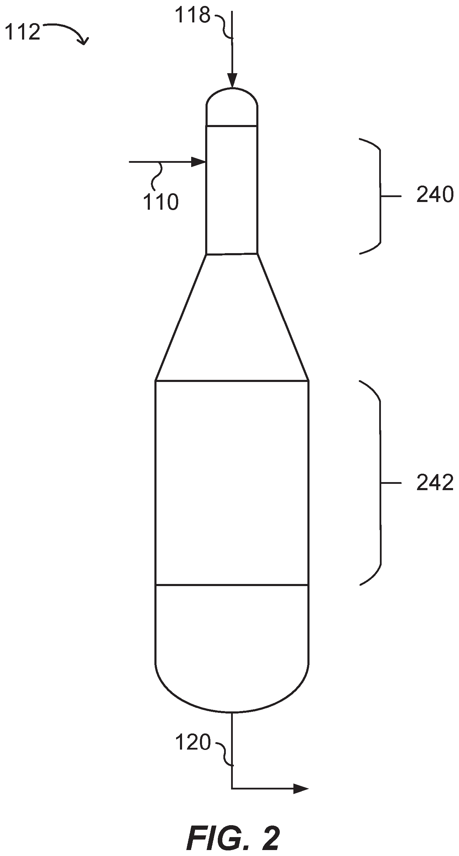

FIG. 2 illustrates a diagram of an example reactor 112 for producing syngas according to at least some examples of the present disclosure. Where the same reference numbers from FIG. 1 are used in FIG. 2, it is understood that the description of FIG. 1, including concentrations, flows, operating conditions, and the like, apply to the example reactor 112 of FIG. 2. Further, as with FIG. 1, additional equipment and flow streams may be included in FIG. 2 may be incorporated for proper operation of the reactor 112.

In the illustrated example, both the preheated feed stream 110 and the preheated oxidizer stream 118 may be introduced to a first portion 240 of the reactor 112, where the preheated oxidizer stream 118 is introduced upstream of the preheated feed stream 110. The preheated oxidizer stream 118 and the preheated feed stream 110 may flow substantially parallel to one another within the reactor 112. The preheated oxidizer stream 118 may be introduced via a burner and form a flame. Jet shear mixing between the preheated oxidizer stream 118 and the preheated feed stream 110 may be caused by a flow rate and/or velocity difference between the preheated oxidizer stream 118 and the preheated feed stream 110. For example, the preheated oxidizer stream 118 may be introduced at a higher flow rate and/or higher velocity than the preheated feed stream 110 to cause jet shear mixing (e.g. high shear mixing) of the streams 110, 118. The ratio of the velocity of the preheated oxidizer stream 118 to the velocity of the preheated feed stream 110 may be in the range from 20 to 150, for example from 30 to 120, or from 50 to 100. The mixing may define the characteristic of the flame. In some instances, the flame may be a floating flame. The flame may be fed with just enough oxygen to burn a fraction of the hydrogen and initiate the rWGS reaction. More specifically, the available hydrogen undergoes partial oxidation with the introduced oxidizer, thereby producing the heat required for the non-catalytic rWGS reaction to take place. Thereafter, the dynamics of the flow inside the reactor 112 facilitate (i) the rapid mixing of the hot gas produced from the partial oxidation of hydrogen and (ii) the rest of the feed to reach a uniform temperature distribution inside the reactor 112 while avoiding hot and cold spots that could produce undesirable products or soot/coke. Unlike furnace-type technologies that rely on indirect heating, the reactor 112 in this system is not limited by heat transfer. Rather, the heating is controlled by mixing, which can be orders of magnitude faster than heat transfer. As a result, the system can be scaled to a higher capacity and throughput.

Optionally, a catalyst may be included in a second portion 242 of the reactor 112 that is downstream of the first portion 240 of the reactor 112. The catalyst should be a sufficient distance from the flame and mixing in the first portion 240 of the reactor 112 to mitigate thermal damage to the catalyst. In some instances, the reactor 112 does not contain catalyst, and, if used in the system, the catalyst is included downstream of the reactor, for example, in the heat recovery unit 122 and/or the line from the reactor 112 to the heat recovery unit 122.

The residence time in the reactor may range from 5 second to 45 seconds (e.g., 5 seconds to 30 second, or from 5 seconds to 15 seconds).

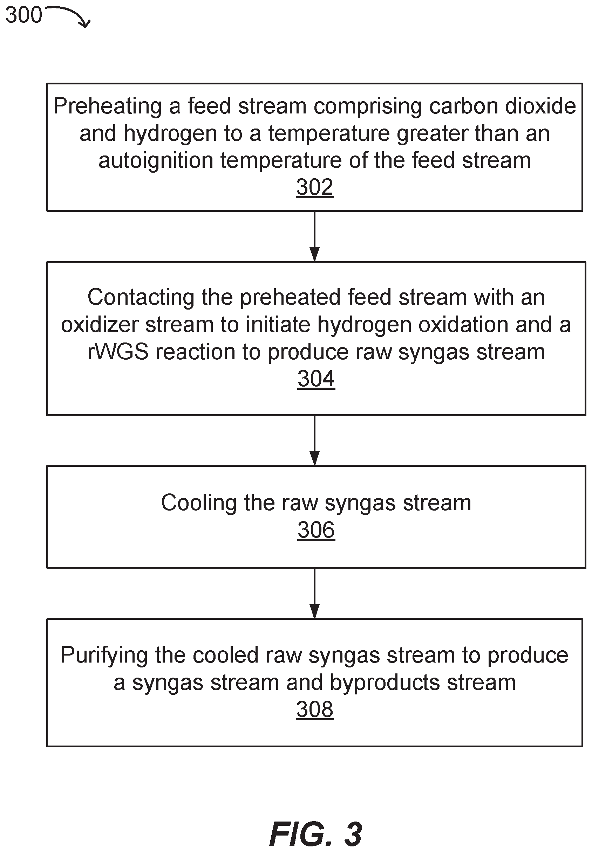

FIG. 3 illustrates a flow chart of a method 300 for producing syngas according to at least some examples of the present disclosure. The operating conditions, stream compositions, and the like described relative to FIGS. 1-2 apply to the methods of the present disclosure including the example method of FIG. 3.

Step 302 may include preheating a feed stream comprising carbon dioxide and hydrogen to a temperature greater than an autoignition temperature of the feed stream.

Step 304 may include contacting the preheated feed stream with an oxidizer stream (preheated or not preheated), which initiates hydrogen oxidation and a rWGS reaction to produce raw syngas stream. At least a portion of the rWGS reaction may occur not in the presence of a catalyst.

Step 306 may include cooling the raw syngas stream.

Step 308 may include purifying the cooled raw syngas stream to produce a syngas stream and byproducts stream.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

There follows a list of numbered clauses defining particular embodiments of the disclosure. Where a numbered clause refers to an earlier numbered clause then those clauses may be considered in combination.
1. A method comprising: preheating a feed stream comprising carbon dioxide and hydrogen to a temperature greater than an autoignition temperature of the feed stream; contacting the preheated feed stream with an oxidizer stream in a reactor, thereby initiating hydrogen oxidation and a reverse water gas shift (rWGS) reaction to produce a raw syngas stream, wherein at least a portion of the rWGS reaction occurs not in the presence of a catalyst; cooling the raw syngas stream; and purifying the cooled raw syngas stream to produce a syngas stream and byproducts stream.
2. The method of clause 1, wherein all of the rWGS reaction occurs not in the presence of the catalyst.
3. The method of clause 1, wherein the contacting of the preheated feed stream and the oxidizer stream is in a first portion of the reactor, and wherein the catalyst is present in a second portion of the reactor downstream of the first portion of the reactor.
4. The method of clause 1 or 3 further comprising: contacting the raw syngas stream with the catalyst downstream of the reactor.
5. The method of any preceding clause, wherein a flow rate of the oxidizer stream is sufficiently higher than a flow rate of the preheated feed stream to achieve high shear mixing of the streams.
6. The method of any preceding clause, wherein a molar ratio of hydrogen to carbon dioxide in the feed stream is 1:1 to 7:1.
7. The method of any preceding clause, wherein: i) the raw syngas stream exiting the reactor at 750°C to 1500°C; and/or ii) the raw syngas stream comprises less than 1 vol% methane.
8. The method of any preceding clause, wherein the oxidizer stream comprises oxygen and a diluent, optionally wherein the diluent is present at 50 vol% or less.
9. The method of any preceding clause, further comprising: preheating the oxidizer stream before contact with the preheated feed stream.
10. The method of any preceding clause, wherein the feed stream further comprises steam, methane, or both.
11. A system comprising: a preheater configured to receive and heat a feed stream comprising hydrogen and carbon dioxide to a temperature greater than an autoignition temperature of the feed stream and produce a preheated feed stream; a reactor configured to receive the preheated feed stream and an oxidizer stream and produce a raw syngas stream; a heat recovery unit configured to receive and cool the raw syngas stream and produce a cooled raw syngas stream; and a purification unit configured to receive and purify the cooled raw syngas stream and produce a syngas product stream and a byproducts stream.
12. The system of clause 11, wherein the system does not contain a catalyst for a reverse water gas shift reaction.
13. The system of clause 11, wherein the heat recovery unit contains a catalyst for a reverse water gas shift reaction such that the raw syngas comes in contact with the catalyst.
14. The system of clause 11 or 13, wherein the reactor contains a catalyst for a reverse water gas shift reaction.
15. The system of any one of clauses 11-14, wherein heat recovery unit comprises one or more heat exchangers, optionally wherein at least one of the one or more heat exchangers is at least a portion of the preheater.

## Claims

1. A method comprising:
preheating a feed stream comprising carbon dioxide and hydrogen to a temperature greater than an autoignition temperature of the feed stream;
contacting the preheated feed stream with an oxidizer stream in a reactor, thereby initiating hydrogen oxidation and a reverse water gas shift, rWGS, reaction to produce a raw syngas stream;
cooling the raw syngas stream in a heat recovery unit;
contacting the raw syngas stream with a catalyst for a RWGS reaction, in the heat recovery unit and/or a line from the reactor to the heat recovery unit; and
purifying the cooled raw syngas stream to produce a syngas stream and byproducts stream.

2. The method of claim 1, wherein a portion of the rWGS reaction or all of the rWGS reaction occurs not in the presence of the catalyst.

3. The method of claim 1, wherein the contacting of the preheated feed stream and the oxidizer stream is in a first portion of the reactor, and wherein the catalyst is present in a second portion of the reactor downstream of the first portion of the reactor.

4. The method of any preceding claim, wherein a flow velocity of the oxidizer stream is sufficiently higher than a flow velocity of the preheated feed stream to achieve shear mixing between the oxidizer stream and the preheated feed stream.

5. The method of any preceding claim, wherein a molar ratio of hydrogen to carbon dioxide in the feed stream is 1:1 to 7:1.

6. The method of any preceding claim, wherein:
i) the raw syngas stream exiting the reactor at 750°C to 1500°C; and/or
ii) the raw syngas stream comprises less than 1 vol% methane.

7. The method of any preceding claim, wherein the oxidizer stream comprises oxygen and a diluent,
optionally wherein the diluent is present at 50 vol% or less.

8. The method of any preceding claim, further comprising:
preheating the oxidizer stream before contact with the preheated feed stream.

9. The method of any preceding claim, wherein the feed stream further comprises steam, methane, or both.

10. The method of any preceding claim, wherein the catalyst is in the heat recovery unit, and the method further comprises:
supplying carbon dioxide, hydrogen, or both to the heat recovery unit separate from the raw syngas stream.

11. A system (100) comprising:
a preheater (108) configured to receive and heat a feed stream comprising hydrogen and carbon dioxide to a temperature greater than an autoignition temperature of the feed stream and produce a preheated feed stream;
a reactor (112) configured to receive the preheated feed stream and an oxidizer stream and produce a raw syngas stream;
a heat recovery unit (122) configured to receive and cool the raw syngas stream and produce a cooled raw syngas stream, wherein the heat recovery unit and/or a line from the reactor to the heat recovery unit contains a catalyst for a reverse water gas shift reaction such that the raw syngas comes in contact with the catalyst; and
a purification unit (126) configured to receive and purify the cooled raw syngas stream and produce a syngas product stream and a byproducts stream.

12. The system of claim 11, wherein the reactor does not contain a catalyst for a reverse water gas shift reaction.

13. The system of claim 11, wherein the reactor contains a catalyst for a reverse water gas shift reaction.

14. The system of any one of claims 11-13, wherein heat recovery unit comprises one or more heat exchangers.

15. The system of claim 14, wherein at least one of the one or more heat exchangers is at least a portion of the preheater.
